# EUROPÄISCHE PATENTANMELDUNG

(11) **EP 1 045 163 A2**
(43) Veröffentlichungstag der Anmeldung: **18.10.2000**
(21) Anmeldenummer: 00107797.3
(22) Anmeldetag: 11.04.2000
(51) Int. Cl.: F16D 65/54

(54) **Scheibenbremse mit selbsttätiger Nachstellvorrichtung**

(30) Priorität: 12.04.1999 DE 19916268
(71) Anmelder: Continental Teves AG & Co. oHG, 60488 Frankfurt (DE)
(72) Erfinder: Glettnik, Wilfried, 55494 Liebshausen (DE)

(57) **Zusammenfassung**

Die vorliegende Erfindung betrifft eine Scheibenbremse mit selbsttätiger Nachstellvorrichtung (2), die zur Verringerung des Herstellungs- sowie des Kostenaufwandes eine vormontierbare Nachstelleinheit (10) aufweist. Diese Nachstelleinheit (10) besitzt im wesentlichen einen an einer mechanischen Betätigungseinrichtung (7) anliegenden Grundkörper (11) sowie einen mit einem Bremskolben (4) in Verbindung stehenden Nachstellbolzen (12), der in Betätigungsrichtung (5) des Bremskolbens (4) verschiebbar am Grundkörper (11) angeordnet ist. Ein den Grundkörper (11) sowie den Nachstellbolzen (12) umschließendes Klemmelement (13) ist in Abhängigkeit vom Betriebszustand der Bremse in der Lage, durch eine Schwenkbewegung den Nachstellbolzen (12) derart gegenüber dem Grundkörper (11) zu verspannen, daß die für eine von der mechanischen Betätigungsvorrichtung (7) eingebrachte Betätigungskraft durch die verspannte Nachstelleinheit (10) übertragen werden kann. In diesem verspannten Zustand besitzt die gesamte Nachstelleinheit (10) eine in Betätigungsrichtung konstante Länge. Vorteilhafterweise läßt sich die beschriebene Nachstellvorrichtung (2) unter Verwendung einfachster Einzelbauteile umsetzen.

## Beschreibung

Die Erfindung betrifft eine Scheibenbremse mit selbsttätiger Nachstellvorrichtung entsprechend den Merkmalen des Patentanspruches 1, die sowohl mittels einer hydraulischen als auch mittels einer mechanischen Betätigungsvorrichtung betätigbar ist und gleichsam für beide Betätigungsarten eine Betätigungskraftübertragung auf einen innerhalb eines Bremsgehäuses verschiebbar angeordneten Bremskolben gestattet. Dabei wird durch die in die Scheibenbremse integrierte selbsttätige Nachstellvorrichtung ein Reibbelagverschleiß an zumindest einem mit dem Bremskolben in Verbindung stehenden Reibelement ausgeglichen.

In der Vergangenheit sind zur Ausführung derartiger Nachstellvorrichtungen zum Ausgleich des Reibbelagverschleißes und entsprechender Nachführung der Reibelemente zahlreiche Lösungsvorschläge gemacht worden. So ist beispielsweise der DE 195 21 634 A1 eine Scheibenbremse mit automatischer Nachstellvorrichtung zu entnehmen, bei der die Nachstellvorrichtung innerhalb des axial im Bremsgehäuse verschiebbar angeordneten hohlen Bremskolbens angeordnet ist. Dabei besteht die Nachstellvorrichtung im wesentlichen aus einer auf einer Spindel drehbar angeordneten Nachstellmutter, die außerdem über eine konische Reibkupplung mit einer zugehörigen Fläche des Bremskolbens zusammenwirkt. Die Spindel ist drehfest im Bremsgehäuse angeordnet und die Nachstellmutter läßt sich gegenüber der Spindel bei geöffneter Reibkupplung verdrehen, wodurch sich die gesamte Nachstellvorrichtung in Zustellrichtung des Bremskolbens verlängert. Durch Einsatz zweier Federn werden Spindel und Nachstellmutter gegenüber dem Bremsgehäuse bzw. dem Bremskolben derart vorgespannt, daß sich die konische Reibkupplung zwischen Kolben und Mutter bei übermäßigem Belagverschleiß öffnet und somit die Nachstellmutter für eine Drehung gegenüber der Spindel freigibt. Dabei dreht sich die Nachstellmutter so lange, bis der Reibbelagverschleiß ausgeglichen ist und die Reibkonuskupplung wieder geschlossen ist. Die beschriebene Scheibenbremse mit Nachstellvorrichtung besitzt einen komplexen Gesamtaufbau, wobei insbesondere die Nachstellvorrichtung zur sicheren Funktion eine überaus exakte Auslegung sowie maßgenaue Herstellung der einzelnen Komponenten der Nachstellvorrichtung erfordert. Hierbei sind insbesondere das toleranzempfindliche selbsthemmende Bewegungsgewinde zwischen Spindel und Nachstellmutter zu nennen wie auch die am Bremskolben bzw. an der Nachstellmutter ausgeführte konische Reibkupplung. Das Erfordernis der hohen Maßgenauigkeit sowie der zum Teil komplexen Herstellung bekannter Nachstellvorrichtungen bedingt somit einen unnötig hohen Fertigungs- wie auch Kostenaufwand.

Davon ausgehend besteht die Aufgabe der Erfindung darin, eine Scheibenbremse mit selbsttätiger Nachstellvorrichtung anzugeben, bei der die Nachstellvorrichtung einen kompakten Gesamtaufbau aufweist und gleichzeitig im wesentlichen einfach und toleranzunempfindlich gestaltete Einzelbauteile aufweist, die kostengünstig herstellbar sind.

Erfüllt wird die Aufgabe durch die Merkmalskombination des Patentanspruches 1. Die der Erfindung entsprechende Scheibenbremse mit selbsttätiger Nachstellvorrichtung weist ein Bremsgehäuse mit einem Bremszylinder und einem im Bremszylinder verschiebbar angeordneten Bremskolben auf, wobei der Bremskolben sowohl mittels einer hydraulischen wie auch mittels einer mechanischen Betätigungsvorrichtung in Zuspannrichtung der Bremse innerhalb des Bremszylinders verschiebbar ist. Üblicherweise wird die hydraulische Betätigungsvorrichtung zur Umsetzung der Betriebsbremsfunktion und die mechanische Betätigungsvorrichtung zur Umsetzung der Feststellbremsfunktion innerhalb des Kraftfahrzeuges verwendet. Dabei kann die erforderliche Betätigungskraft für die mechanische Betätigungsvorrichtung dieser nahezu beliebig zugeführt werden, zum Beispiel durch Muskelkraft des Fahrzeugbedieners, durch Aktivierung einer elektromechanischen Stelleinheit für die Feststellbremsfunktion etc. Zwischen der mechanischen Betätigungsvorrichtung und dem Bremskolben ist eine verlängerbare Nachstelleinheit angeordnet, die einen an der mechanischen Betätigungsvorrichtung anliegenden sowie im Bremsgehäuse verschiebbar angeordneten Grundkörper aufweist und einen gegenüber dem Grundkörper sowie dem Gehäuse verschiebbar angeordneten Nachstellbolzen umfaßt. Der Nachstellbolzen wiederum ist fest mit dem Bremskolben verbunden. Zum Ausgleich eines auftretenden Reibbelagverschleißes an einem mit dem Bremskolben verbundenen Reibelement kann der Bremskolben dem verschleißbedingten Verschiebeweg des Reibelementes folgen. Ein schwenkbar am Grundkörper gelagertes Klemmelement verschwenkt bei Verschiebung des Grundkörpers gegenüber dem Bremsgehäuse im Falle einer mechanischen Betätigung der Scheibenbremse in eine Sperrposition, in der der Nachstellbolzen mittels des Klemmelementes gegenüber dem Grundkörper derart reib- bzw. formschlüssig verspannt ist, daß eine Verschiebung des Nachstellbolzens gegenüber dem Grundkörper verhindert wird. Das bedeutet, daß die einen Grundkörper und einen Nachstellbolzen aufweisende Nachstelleinheit lediglich bei Aktivierung der mechanischen Betätigungsvorrichtung im Falle einer Feststellbremsung in ihrer Gesamtlänge in Zustellrichtung des Bremskolbens arretiert ist, so daß sich der Nachstellbolzen nicht gegenüber dem Grundkörper verschieben kann. Die von der mechanischen Betätigungsvorrichtung aufgebrachte Betätigungskraft kann somit unmittelbar über den Nachstellbolzen in den Bremskolben eingeleitet werden. Damit verbleibt die Nachstellvorrichtung für jede Betätigung der hydraulischen Betätigungsvorrichtung (Betriebsbremsung) sowie für jeden sonstigen Betriebszustand mit Ausnahme der Aktivierung der mechanischen Betätigungsvorrichtung in ihrem Grundzustand, der eine freie Verschiebung des Bremskolbens bzw. des Nachstellbolzens gegenüber dem Grundkörper zuläßt.

Im einzelnen liegt der Nachstellbolzen insbesondere an einer Kontaktfläche des Grundkörpers verschiebbar an. Dabei sind die Kontaktfläche des Grundkörpers sowie die zugehörige Oberfläche des Nachstellbolzens derart aufeinander abgestimmt, daß das Entlanggleiten des Nachstellbolzens am Grundkörper für die gewünschten Betriebszustände erlaubt wird, andererseits bei Verschwenken des Klemmelementes der Nachstellbolzen durch insbesondere reibschlüssige Verklemmung gegenüber dem Grundkörper sicher arretiert ist.

In einer bevorzugten Ausführungsform umschließt das Klemmelement sowohl den Nachstellbolzen als auch den Grundkörper ringförmig. Das Klemmelement ist dabei als einfacher Klemmring ausgeführt und ist bei Verschwenken um eine Anlagefläche am Grundkörper in der Lage, den Nachstellbolzen und den Grundkörper an ihrer Kontaktfläche mit einer derartig großen Flächenpressung zu beaufschlagen, daß der Nachstellbolzen reib- bzw. formschlüssig am Grundkörper gehalten ist und eine Verschiebung des Nachstellbolzens gegenüber dem Grundkörper sicher vermieden wird.

Zur sicheren Funktion bzw. zur Festlegung der Auslösezustände der Nachstellvorrichtung sind vorzugsweise Federelemente vorgesehen, die die Einzelteile der Nachstelleinheit mit einer Federvorspannkraft beaufschlagen. Der Grundkörper liegt mittels einer im Bremsgehäuse abgestützten ersten Feder unter Federvorspannung entgegen einer Betätigungsrichtung des Bremskolbens an der mechanischen Betätigungsvorrichtung an. Diese erste Feder sorgt somit für einen stetigen Kontakt zwischen Grundkörper und mechanischer Betätigungsvorrichtung und bewirkt damit die die Einnahme der Grundposition des Grundkörpers. In diesem Zustand ist durch Mitnahme des Klemmelementes am Grundkörper auch das Klemmelement in seiner Grundposition. Das bedeutet, die Nachstellvorrichtung ist inaktiv und der Nachstellbolzen bzw. der damit in Verbindung stehende Bremskolben sind frei gegenüber dem Bremsgehäuse und dem Grundkörper beweglich. Das Klemmelement liegt in seiner Grundposition, das heißt bei nichtbetätigter mechanischer Betätigungsvorrichtung, unter Federvorspannung einer zweiten Feder sowohl an einer bremsgehäusefesten Anschlagfläche wie auch an einer entsprechenden Anlagefläche des Grundkörpers an. Dabei ist das Klemmelement zumindest abschnittsweise im Grundkörper derart aufgenommen und geführt, daß das Klemmelement vom Grundkörper mitgenommen wird und somit der Bewegung des Grundkörpers folgt. In Überlagerung mit der Beaufschlagung einer Federkraft der zweiten Feder resultiert somit eine Verschiebung des Grundkörpers in einer Schwenkbewegung des Klemmelementes um die bremsgehäusefeste Anschlagfläche. Gemäß einer ersten Variante stützt sich dabei die zweite Feder einerseits am Grundkörper und andererseits am Klemmelement ab. Dadurch wird das Klemmelement gegenüber dem Grundkörper mit einer Federkraft beaufschlagt, die das im wesentlichen ringförmige Klemmelement jedoch asymmetrisch beaufschlagt, um die gewünschte Schwenkbewegung des Klemmelementes gegenüber dem Grundkörper zu veranlassen.

In einer zweiten Ausführungsform ist die zweite Feder einerseits am Bremsgehäuse und andererseits am Klemmelement abgestützt. Auch eine derartige Ausgestaltung führt zu einer asymmetrischen Federvorspannung und damit Drehmomentbelastung am Klemmelement, wodurch die Schwenkbewegung des Klemmelementes bei Verschiebung des Grundkörpers bewirkt wird.

In einer bevorzugten Ausführungsform der Scheibenbremse mit Nachstellvorrichtung ist die bremsgehäusefeste Anschlagfläche für das Klemmelement an einem im Bremsgehäuse befestigten Anschlagstift vorgesehen. Dabei ist der Anschlagstift vorzugsweise in das Bremsgehäuse eingesetzt (z. B. eingeschraubt) und erstreckt sich parallel zur Bremszylinderachse in das Innere des Bremszylinders. Der Anschlagstift mit seiner Anlagefläche dient dabei der maßgenauen Festlegung eines Anschlages für das Klemmelement zur Gewährleistung der freien Beweglichkeit des Nachstellbolzens in der Grundposition des Grundkörpers bzw. des Klemmelementes. Die Länge des Anschlagstiftes muß dabei derart abgestimmt sein, daß in Grundposition des Grundkörpers das am Grundkörper aufgenommene Klemmelement durch Anlage an der Anschlagfläche ein Verklemmen des Nachstellbolzens am Grundkörper verhindert. Der Anschlagstift muß also in seiner Länge auf die jeweiligen baulichen Abmessungen der Scheibenbremse bzw. der Nachstellvorrichtung abgestimmt werden, wobei insbesondere auch der Kolbenhub berücksichtigt werden muß. Insbesondere bei Verschraubung des Anschlagstiftes innerhalb des Gehäuses läßt sich das Anschlagmaß, das heißt die Position des an der Anschlagfläche anliegenden Klemmelementes bezogen auf die baulichen Gegebenheiten der Scheibenbremse exakt einstellen. Dadurch können mögliche Fertigungstoleranzen ausgeglichen sowie die sichere Funktion der Nachstellvorrichtung gewährleistet werden.

In einer weiteren bevorzugten Ausführungsvariante ist zur Verbesserung der Klemmfunktion zwischen Nachstellbolzen und Grundkörper zumindest die Kontaktfläche des Grundkörpers bzw. die entsprechend dort anliegende Oberfläche des Nachstellbolzens mit einer aufgerauhten Oberflächenstruktur versehen. Diese kann beispielsweise in einer Rändelung, Verzahnung oder sonstigen Aufrauhung bestehen. Grundsätzlich wird durch die Aufrauhung die Reibung zwischen Nachstellbolzen und Grundkörper während der Relativverschiebung erhöht und insbesondere bei Schrägstellung des Klemmelementes wird die reibschlüssige Verspannung von Nachstellbolzen und Grundkörper deutlich verstärkt. Bei entsprechender Aufrauhung sowohl der Mantelfläche des Nachstellbolzens als auch der zugehörigen Oberfläche des Grundkörpers kommt es sogar zu einem Formschluß zwischen Nachstellbolzen und Grundkörper. Insgesamt ist die Nachstellvorrichtung dadurch in der Lage, größere von der mechanischen Betätgungsvorrichtung eingebrachte Betätigungskräfte auf den Bremskolben zu übertragen.

Grundsätzlich ist die beschriebene Nachstellvorrichtung aufgrund der einfachen Gestaltung ihrer Einzelbauteile sowie der geringen Bauteilanzahl besonders kostengünstig herstellbar. Insbesondere gegenüber bekannten Nachstellvorrichtung mit Mutter-Spindelanordnung ergibt sich dadurch eine erhebliche Kosten- sowie Fertigungseinsparung.

Ausführungsbeispiele der Erfindung werden anhand der Zeichnung dargestellt und im folgenden näher erläutert.

Es zeigen
- Fig. 1: eine geschnittene Ansicht eines Bremsgehäuses mit Nachstellvorrichtung,
- Fig. 2: zwei teilweise geschnittene Ansichten eines Grundkörpers der in Fig. 1 dargestellten Nachstellvorrichtung,
- Fig. 3: zwei teilweise geschnittene Ansichten eines Klemmelementes,
- Fig. 4: zwei teilweise geschnittene Ansichten einer Nachstelleinheit innerhalb des Bremszylinders,
- Fig. 5: eine weitere Ausführung einer Nachstelleinheit innerhalb eines Bremsgehäuses.

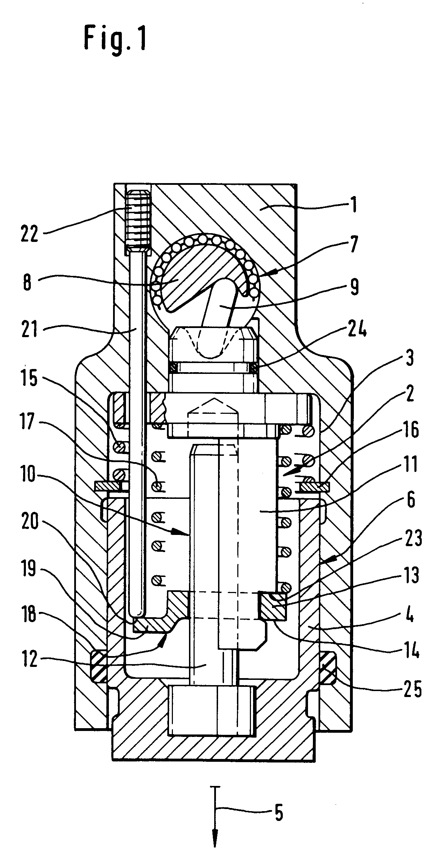

Das in Fig. 1 dargestellte Bremsgehäuse 1 mit integrierter Nachstellvorrichtung 2 ist Bestandteil einer kombinierten Scheibenbremse insbesondere für Kraftfahrzeuge. Derartige kombinierte Scheibenbremsen werden sowohl im Sinne einer Betriebs- wie auch Feststellbremsfunktion wirksam. Im Bremsgehäuse 1 ist dazu eine aus einem Bremszylinder 3 mit darin in Betätigungsrichtung 5 verschiebbar angeordnetem Bremskolben 4 bestehende hydraulische Betätigungseinrichtung 6 sowie auch eine mechanische Betätigungseinrichtung 7 vorgesehen. Die mechanische Betätigungseinrichtung 7 weist eine drehbar im Gehäuse gelagerte Betätigungswelle 8 auf, deren Drehbewegung durch ein zwischengeschaltetes Druckstück 9 in bekannter Weise in eine Translationsbewegung der Nachstellvorrichtung 2 umgewandelt wird. Damit kann der Bremskolben 4 sowohl durch die hydraulische wie auch durch die mechanische Betätigungseinrichtung 7 in Betätigungsrichtung 5 innerhalb des Bremsgehäuses 1 verschoben werden. Der Bremskolben 4 wiederum steht in Verbindung mit einem nicht gezeigten Reibelement, welches zur Anlage an einer ebenfalls nicht gezeigten Bremsscheibe vorgesehen ist. Wie auch den übrigen Figuren zu entnehmen ist umfaßt die Nachstellvorrichtung 2 eine in Betätigungsrichtung 5 des Bremskolbens 4 verlängerbare Nachstelleinheit 10, die im wesentlichen einen Grundkörper 11 sowie einen Nachstellbolzen 12 aufweist. Der Nachstellbolzen 12 liegt an einer Kontaktfläche des Grundkörpers 11 an und ist gegenüber dem Grundkörper 11 bezüglich der Betätigungsrichtung 5 verschiebbar am Grundkörper 11 angeordnet. Grundkörper 11 und Nachstellbolzen 12 werden von einem im wesentlichen ringförmigen Klemmelement 13 umschlossen, welches mit einem ersten Abschnitt 14 schwenkbar am Grundkörper 11 aufgenommen ist. Je nach Schwenkposition des Klemmelementes 13 kann dadurch die freie Beweglichkeit des Nachstellbolzens 12 gegenüber dem Grundkörper 11 zugelassen werden bzw. gesperrt werden.

Zur sicheren Funktion der Nachstellvorrichtung 2 ist der Grundkörper 11 mittels einer sich am Bremsgehäuse 1 abstützenden ersten Druckfeder 15 entgegen der Betätigungsrichtung 5 gegenüber der mechanischen Betätigungsvorrichtung 7 vorgespannt. Dadurch wird der Grundkörper 11 in stetiger Anlage zum Druckstück 9 gehalten. Vorteilhafterweise stützt sich die erste Druckfeder 15 gehäuseseitig an einem in den Bremszylinder eingesetzten Abstützring 16 ab. Analog dazu kann selbstverständlich auch eine entsprechende Absatzfläche am Bremsgehäuse 1 angeformt sein. Des weiteren ist eine zweite Druckfeder 17 vorgesehen, die sich einerseits am Grundkörper 11 und andererseits am Klemmelement 13 abstützt. Dabei wird das Klemmelement 13 asymmetrisch mit der Federkraft der zweiten Druckfeder 17 beaufschlagt, da die zweite Druckfeder 17 lediglich am ersten Abschnitt 14 des Klemmelementes 13 an diesem anliegt und im Bereich eines zweiten Klemmelementabschnittes 18 kein Kontakt zwischen der Druckfeder 17 und dem Klemmelement 13 besteht. Durch die zweite Druckfeder 17 wird somit ein bezogen auf die Darstellung nach Fig. 1 im Uhrzeigersinn gerichtetes Kippmoment auf das Klemmelement 13 übertragen. In einer Grundposition des Grundkörpers 11 bzw. des Klemmelementes 13, das heißt bei nichtbetätigter mechanischer Betätigungseinrichtung 7, liegt das Klemmelement 13 mit einem Absatz 19 des zweiten Klemmelementabschnittes 18 an einer Anschlagfläche 20 eines im Bremsgehäuse 1 befestigten Anschlagstiftes 21 an. Dabei kann die Anschlagfläche 20 analog dazu auch auf andere Weise am Bremsgehäuse 1 angebracht sein. Durch die Verwendung eines Anschlagstiftes 21 mit Anschlagfläche 20 ergibt sich die Möglichkeit, den Anschlagstift 21 über ein Gewinde 22 im Bremsgehäuse 1 zu verschrauben und damit gleichzeitig eine Justiermöglichkeit zu bieten. Letztlich beeinflußt der Anschlagstift 21 mittels seiner Anschlagfläche 20 die Grundposition des Klemmelementes 13 bzw. die sichere Funktion der Nachsteilvorrichtung 2.

Im folgenden soll die Funktion der Scheibenbremse mit Nachstellvorrichtung 2 beschrieben werden in Abhängigkeit von den verschiedenen Betriebszuständen der Bremse. Der in Fig. 1 dargestellte Zustand der Nachstellvorrichtung 2 entspricht der Grundposition bzw. Grundstellung der Nachstelleinheit, bei der das Klemmelement 13 im wesentlichen senkrecht zur Betätigungsrichtung 5 angeordnet ist und dadurch eine freie Beweglichkeit des Nachstellbolzens 12 gegenüber dem Grundkörper 11 zuläßt. Der Nachstellbolzen 12 wiederum ist fest mit dem Bremskolben 4 verbunden, womit auch der Bremskolben in Grundposition der Nachstelleinheit 10 frei beweglich ist. Im Falle einer Betriebsbremsung, das heißt bei Betätigung der hydraulischen Betätigungseinrichtung 6 wird der Innenraum des topfförmigen Bremskolbens 4 mit hydraulischem Druck beaufschlagt, wodurch sich der Bremskolben 4 mitsamt Nachstellbolzen 12 in Betätigungsrichtung 5 bewegt. Die Grundposition des Grundkörpers 11 sowie des Klemmelementes 13 ist von der hydraulischen Druckbeaufschlagung unbeeinflußt, lediglich der Nachstellbolzen 12 wird zusammen mit dem Bremskolben 4 bewegt. Das heißt selbst bei hydraulischer Druckbeaufschlagung verbleibt das Klemmelement 13 in seiner im wesentlichen senkrechten Ausrichtung gegenüber der Betätigungsrichtung 5. In dieser Ausrichtung liegt das Klemmelement 13 mit seinem Absatz 19 an der Anlagefläche 20 und mit seinem ersten Abschnitt 14 an einer Anlagefläche 23 des Grundkörpers 11 an. Zur allgemeinen Abdichtung des hydraulischen Druckraumes sind an beiden Enden des Druckraumes elastische Dichtelemente 24,25 vorgesehen.

Nach Beendigung einer hydraulischen Betätigung wird der Bremskolben 4 durch Rückbildung einer elastischen Deformation des Dichtelementes 25 entgegen der Betätigungsrichtung 5 zurückgezogen, so daß sich ein geringfügiges Lüftspiel zwischen nichtgezeigter Bremsscheibe und Reibelement ergibt. Ist dabei im Verlauf der Betriebsbremsung, d. h. bei hydraulischer Betätigung, ein Reibbelagverschleiß aufgetreten, bewegt sich der Bremskolben 4 entsprechend weiter aus dem Bremszylinder 3 heraus und vergrößert damit durch Mitnahme des Nachstellbolzens 12 die relevante Länge der Nachstelleinheit 10 in Betätigungsrichtung 5.

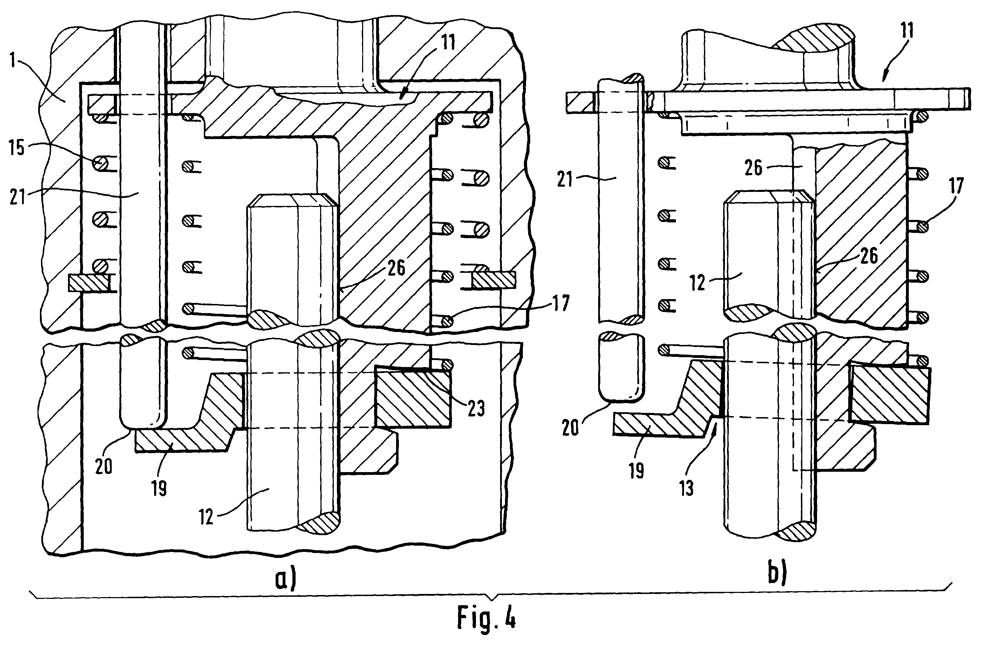

Im Falle einer Feststellbremsung, d.h. bei mechanischer Betätigung wird durch Drehung der Betätigungswelle 8 im Uhrzeigersinn (siehe Figur 1) und entsrechender Bewegung des Druckstückes 9 in Betätigungsrichtung 5 der Grundkörper 11 innerhalb des Bremsgehäuses 1 verschoben. Gleichzeitig wird über die Anlagefläche 23 bzw. durch die Federkraft der zweiten Druckfeder 17 das Klemmelement 13 derart mitgenommen, daß es um die Anschlagfläche 20 im Uhrzeigersinn verschwenkt und den Nachstellbolzen 12 gegen eine Kontaktfläche 26 des Grundkörpers preßt. Der Nachstellbolzen 12 wird dadurch reibschlüssig am Grundkörper 11 fixiert, so daß eine axiale Verlängerung der Nachstelleinheit 10 verhindert wird. Die eingeleitete mechanische Betätigungskraft kann somit unmittelbar über die Nachstelleinheit 10 auf den Bremskolben 4 übertragen werden. Dabei kann sich der Bremskolben 4 mit Nachstelleinheit 10 bei sehr hohem Verschleiß auch so weit in Betätigungsrichtung 5 verschieben, daß das Klemmelement 13 mit seinem Absatz 19 von der Anschlagfläche 20 abhebt jedoch in seiner Schrägstellung verbleibt. Nach Beendigung der mechanischen Betätigung wird durch die Wirkung der ersten Druckfeder 15 die Nachstelleinheit 10 mitsamt Bremskolben 4 entgegen der Betätigungsrichtung 5 in das Bremsgehäuse zurückgezogen. Andererseits bewirkt die zweite Druckfeder 17 die Beibehaltung der schräggestellten Ausrichtung des Klemmelementes 13 (siehe Fig. 4b), bis die Nachstelleinheit 10 so weit in das Bremsgehäuse 1 zurückgezogen ist, daß der Absatz 19 in Anlage mit der Anschlagfläche 20 gerät und schließlich das Klemmelement 13 wieder seine Grundposition nach Entlastung der Bremse erreicht. Damit ist das Klemmelement 13 wieder im wesentlichen senkrecht zur Betätigungsrichtung 5 ausgerichtet und gestattet für die nächste hydraulische Betätigung eine freie Beweglichkeit von Bremskolben 4 und Nachstellbolzen 12.

Insgesamt wird der Bremskolben 4 mit Nachstellbolzen 12 bei jeder hydraulischen Betätigung entsprechend dem Reibbelagverschleiß in Betätigungsrichtung 5 nachgeführt und lediglich bei mechanischer Betätigung wird die momentane Stellung der Nachstelleinheit 10 bzw. ihre relevante Länge in Betätigungsrichtung 5 zur Übertragung der mechanischen Betätigungskraft beibehalten.

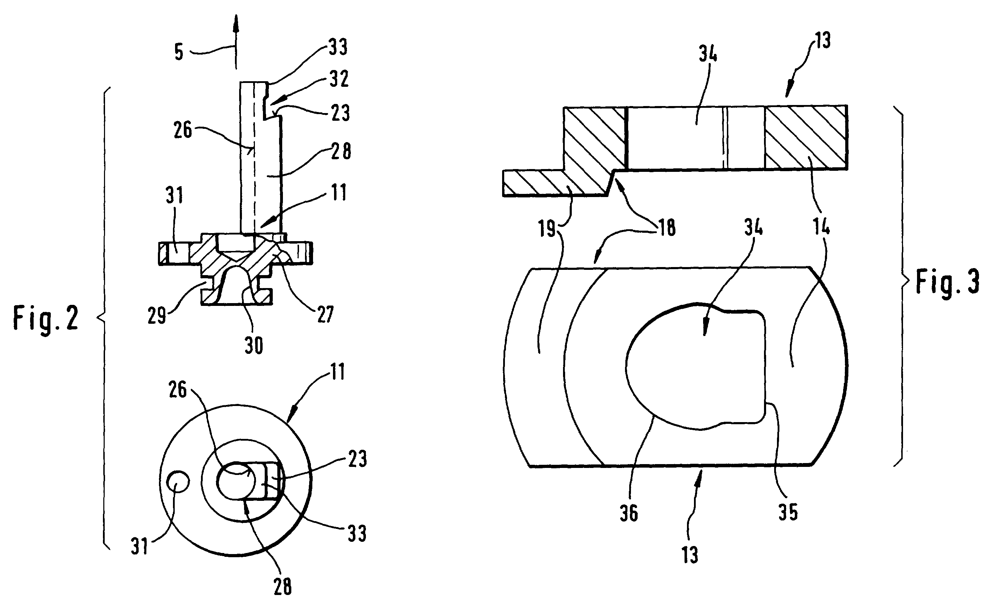

Den Fig. 2 und 3 sind in vergrößerter Darstellung konstruktive Einzelheiten des Grundkörpers 11 sowie des Klemmelementes 13 zu entnehmen. Der Grundkörper 11 besitzt im wesentlichen einen zylindrischen Basisabschnitt 27 sowie einen senkrecht sich dazu erstreckenden Führungsabschnitt 28. Der Basisabschnitt 27 erstreckt sich in Richtung der mechanischen Betätigungseinrichtung in das Bremsgehäuse hinein und besitzt eine umlaufende Nut 29 zur Aufnahme eines Dichtelementes 24. Weiterhin ist an dem der mechanischen Betätigungseinrichtung zugewandten Ende des Basisabschnittes 27 ein im wesentlichen konischer Aufnahmetrichter 30 für das Druckstück 9 vorgesehen. Durch die Gestaltung des Aufnahmetrichters 30 ist das Druckstück 9 innerhalb gewisser Grenzen schwenkbar im Aufnahmetrichter 30 gelagert. Weiterhin besitzt der Basisabschnitt 27 eine Durchgangsöffnung 31 für den Fig. 1 dargestellten Anschlagstift 21, wodurch der Grundkörper 11 gleichzeitig verdrehgesichert innerhalb des Bremsgehäuses angeordnet werden kann. Am Führungsabschnitt 28 ist eine in Form eines Zylindersegmentes ausgebildete Kontaktfläche 26 angeformt, an der der Nachstellbolzen 12 anliegen und entlanggleiten kann. Zur Verstärkung der reibschlüssigen Klemmwirkung zwischen Nachstellbolzen 12 und Kontaktfläche 26 bzw. die entsprechende Oberfläche des Nachstellbolzens 12 eine aufgerauhte Oberfläche aufweisen.

Dies läßt sich beispielsweise durch Rändelung, Verzahnung oder sonstige mechanische Aufrauhung erreichen. Außerdem ist am Führungsabschnitt 28 eine Aufnahme 32 für das Klemmelement 13 ausgebildet. Diese Aufnahme besitzt sowohl eine gegenüber der Betätigungsrichtung 5 geneigte bzw. abgerundete Anlagefläche 23 sowie einen Vorsprung 33. Die Anlagefläche 23 dient der Einleitung der Schwenkbewegung und der anschließenden Mitnahme des Klemmelementes 13 bei Verschiebung des Grundkörpers 11 innerhalb des Bremsgehäuses. Bei der oben beschriebenen Rückstellung des Grundkörpers nach beendeter mechanischer Betätigung der Bremse wird das Klemmelement 13 über den Vorsprung 33 entsprechend der Rückstellung des Grundkörpers zurückgeführt.

Das in Fig. 3 darstellte Klemmelement 13 ist im wesentlichen scheibenförmig ausgebildet und umschließt ringförmig den Führungsabschnitt des Grundkörpers sowie den Nachstellbolzen 12. Dazu ist eine Durchgangsöffnung 34 im Klemmelement 13 vorgesehen. Dabei liegt das Klemmelement 13 mit einem im wesentlichen rechteckigen Öffnungsabschnitt 35 in der Aufnahme 32 des Grundkörpers 11 an und umgibt mit einem kreisförmigen Öffnungsabschnitt 36 den Nachstellbolzen 12. Ein erster seitlicher Abschnitt 14 des Klemmelementes dient der Anlage an einer zugehörigen Anlagefläche 23 des Grundkörpers und an einem gegenüberliegenden zweiten Abschnitt 18 ist ein Absatz 19 angeformt zur Anlage an einer nicht gezeigten gehäuseseitigen Anschlagfläche.

Fig. 4 verdeutlicht im wesentlichen die unterschiedlichen Zustände der Nachstelleinheit bei freier Beweglichkeit des Nachstellbolzens (siehe Fig. 4a) bzw. bei Sperrung der Nachstelleinheit (siehe Fig. 4b), das heißt bei reibschlüssiger Arretierung des Nachstellbolzens 12 an einer Kontaktfläche 26. In seiner Grundstellung ist das Klemmelement 13 nahezu senkrecht zur Achse des Nachstellbolzens 12 ausgerichtet erlaubt dessen freie Verschiebbarkeit gegenüber dem Grundkörper 11.
Bei aufgetretenem Reibbelagverschleiß sowie im Falle einer mechanischen Bremsbetätigung stellt sich das Klemmelement 13 gemäß Fig. 4b schräg gegenüber der Achse des Nachstellbolzens 12 und verklemmt den Nachstellbolzen 12 reibschlüssig am Grundkörper 11.

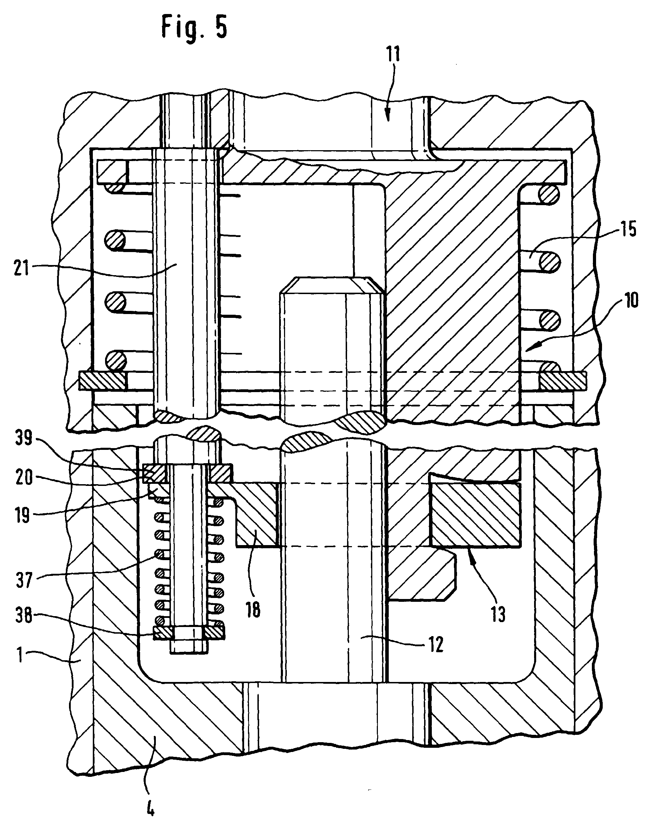

Fig. 5 zeigt eine zweite Ausführungsvariante einer Nachstelleinheit 10, bei der das Klemmelement 13 auf andere Art und Weise gegenüber dem Anschlagstift 21 mit einer Federvorspannkraft beaufschlagt wird. Dazu ist eine andere Ausführung einer zweiten Druckfeder 37 vorgesehen, die sich einerseits über eine Anschlagscheibe 38 am Anschlagstift 21 abstützt und andererseits am Absatz 19 des Klemmelementes. Bei Gewährleistung einer analogen Funktion zur bereits beschriebenen Variante wird damit der zweite Abschnitt 18 des Klemmelementes in der in Fig. 5 dargestellten Grundposition der Nachstelleinheit 10 an einer an einem Anschlagelement 39 ausgebildeten Anschlagfläche 20 gehalten. Durch die zweite Druckfeder 37 wird in entsprechender Weise eine asymmetrische Federvorspannkraft auf das Klemmelement 13 übertragen, die bei Verschiebung des Grundkörpers 11 innerhalb des Bremsgehäuses 1 eine Schwenkbewegung mit Schrägstellung des Klemmelementes 13 bewirkt. Die allgemeine Funktionsweise der Nachstellvorrichtung bleibt dabei zum oben beschriebenen erhalten.

Der erfinderische Gedanke ist dabei nicht ausschließlich auf die in den Figuren gezeigten Ausführungsbeispiele beschränkt, sondern umfaßt vielmehr auch noch weitere Kombinationen des in den Patentansprüchen enthaltenen Erfindungsgedankens. Dies bezieht sich insbesondere auf die exakte Ausgestaltung des Grundkörpers 11, des Nachstellbolzens 12, des Klemmelementes 13 sowie der verwendbaren Federanordnungen.

## Patentansprüche

1. Scheibenbremse mit selbsttätiger Nachstellvorrichtung (2), mit einem Bremsgehäuse (1), das einen Bremszylinder (3) und einen im Bremszylinder (3) verschiebbar angeordneten Bremskolben (4) aufweist, mit einer hydraulischen (6) und einer mechanischen Betätigungsvorrichtung (7), mit einer zwischen der mechanischen Betätigungsvorrichtung (7) und dem Bremskolben (4) angeordneten verlängerbaren Nachstelleinheit (10), dadurch **gekennzeichnet**, daß die Nachstelleinheit (10) einen an der mechanischen Betätigungsvorrichtung (7) anliegenden sowie im Bremsgehäuse (1) verschiebbar angeordneten Grundkörper (11) und einen gegenüber dem Grundkörper (11) verschiebbar angeordneten Nachstellbolzen (12) aufweist, der mit dem Bremskolben (4) verbunden ist, wobei ein schwenkbar am Grundkörper (11) gelagertes Klemmelement (13) vorgesehen ist, das bei Verschiebung des Grundkörpers (11) gegenüber dem Bremsgehäuse (1) in eine Sperrposition verschwenkt wird, in der der Nachstellbolzen (12) mittels des Klemmelementes (13) gegenüber dem Grundkörper (11) arretiert ist, so daß eine Verschiebung des Nachstellbolzens (12) gegenüber dem Grundkörper (11) verhindert wird.

2. Scheibenbremse mit Nachstellvorrichtung nach Anspruch 1, dadurch **gekennzeichnet**, daß der Nachstellbolzen (12) an einer Kontaktfläche (26) des Grundkörpers (11) verschiebbar anliegt.

3. Scheibenbremse mit Nachstellvorrichtung nach einem der vorhergehenden Ansprüche, dadurch **gekennzeichnet**, daß das Klemmelement (13) den Nachstellbolzen (12) und den Grundkörper (11) ringförmig umschließt.

4. Scheibenbremse mit Nachstellvorrichtung nach einem der vorhergehenden Ansprüche, dadurch **gekennzeichnet**, daß der Grundkörper (11) mittels einer im Bremsgehäuse (1) abgestützten ersten Feder (15) unter Federvorspannung entgegen einer Betätigungsrichtung (5) des Bremskolbens (4) an der mechanischen Betätigungsvorrichtung (7) anliegt.

5. Scheibenbremse mit Nachstellvorrichtung nach einem der vorhergehenden Ansprüche, dadurch **gekennzeichnet**, daß das Klemmelement (13) in seiner Grundposition bei nicht betätigter mechanischer Betätigungsvorrichtung (7) unter Federvorspannung einer zweiten Feder (17,37) sowohl an einer bremsgehäusefesten Anschlagfläche (20) wie auch an einer Anlagefläche (23) des Grundkörpers (11) anliegt.

6. Scheibenbremse mit Nachstellvorrichtung nach Anspruch 5, dadurch **gekennzeichnet**, daß die zweite Feder (17) sich einerseits am Grundkörper (11) und andererseits am Klemmelement (13) abstützt.

7. Scheibenbremse mit Nachstellvorrichtung nach Anspruch 5, dadurch **gekennzeichnet**, daß die zweite Feder (37) sich einerseits am Bremsgehäuse (1) und andererseits am Klemmelement (13) abstützt.

8. Scheibenbremse mit Nachstellvorrichtung nach einem der Ansprüche 5 bis 7, dadurch **gekennzeichnet**, daß die Anschlagfläche (20) mit einem im Bremsgehäuse (1) befestigte Anschlagstift (21) ausgebildet ist.

9. Scheibenbremse mit Nachstellvorrichtung nach Anspruch 2, dadurch **gekennzeichnet**, daß zumindest die Kontaktfläche (26) des Grundkörpers (11) bzw. die entsprechend dort anliegende Oberfläche des Nachstellbolzens (12) eine aufgerauhte Oberflächenstruktur aufweist.
